# EUROPEAN PATENT APPLICATION

(11) **EP 4 184 965 A1**
(43) Date of publication of application: **24.05.2023**
(21) Application number: 22208050.9
(22) Date of filing: 17.11.2022
(51) Int. Cl.: H04W 4/40, H04W 28/02, H04L 47/32

(54) **FLOW CONTROL MECHANISM FOR V2X COMMUNICATION INTELLIGENT FLOW CONTROL**

(30) Priority: 22.11.2021 IN 202141053570
(71) Applicant: Harman International Industries, Inc., Stamford, Connecticut 06901 (US)
(72) Inventor: Radhakrishnan, Vijay, 560043 Bangalore (IN); Jain, Rishu, 560067 Bangalore (IN)
(74) Representative: Bertsch, Florian Oliver

(57) **Abstract**

Methods and systems are provided for processing received messages from the V2X network. The method may allow the vehicle to identify high priority messages and send them to the upper layers for further processing without any feedback mechanism from the upper layers. The method may ensure that the system processes all high priority messages even during high load and high congestion scenarios by intelligently selecting the messages that should be dropped at lower layers so, that the load at the processor is not increased thus controlling the system behavior in high load conditions. This avoids dropping of high priority messages due to the system not being able to handle the rate at which the messages are being received.

## Description

### BACKGROUND

### TECHNICAL FIELD

Embodiments of the subject matter disclosed herein relate to vehicle communications, and more specifically, to a flow control module configured to reduce a load of the processing system which processes the inter-vehicle communication messages.

### DISCUSSION OF ART

Vehicles may use a communication network to communicate with one another, with pedestrians, or with a central infrastructure. The communication network may increase road safety, roadway/powertrain efficiencies, and provide other benefits. Information may be exchanged using broadcast messages over a wireless medium.

Transmission of messages from vehicles, pedestrians, and road side units (RSUs) may be processing intensive. During certain conditions, such as during periods of higher traffic congestion, the load of the network may be relatively high and the arrival rate of messages may exceed the ability of the Host Vehicle (HV) to process the messages. Messages may be inadvertently dropped by the HV. Thus, there is a demand to reduce a load on the processor to ensure that high priority messages are not dropped.

### BRIEF DESCRIPTION

In one embodiment, the current disclosure provides support for a system to enable flow control of messages in the lower layer of the processing system based on the arrival rate of received messages. The system may include a wireless network communicatively coupled to a plurality of vehicles, a processor of a vehicle of the plurality of vehicles comprises instructions stored on non-transitory memory thereof that when executed enable the processor to flow control messages in a lower layer of the vehicle's processing system from a first group of vehicles of the plurality of vehicles in response to a rate of messages received being greater than a threshold rate.

### BRIEF DESCRIPTION OF THE DRAWINGS

FIG. 1A shows a vehicle system in communication with a wireless network.
FIG. 1B shows layers of the processing system.
FIG. 2 illustrates a method for activating flow control.
FIG. 3 shows a method for filtering messages via the flow control.

### DETAILED DESCRIPTION

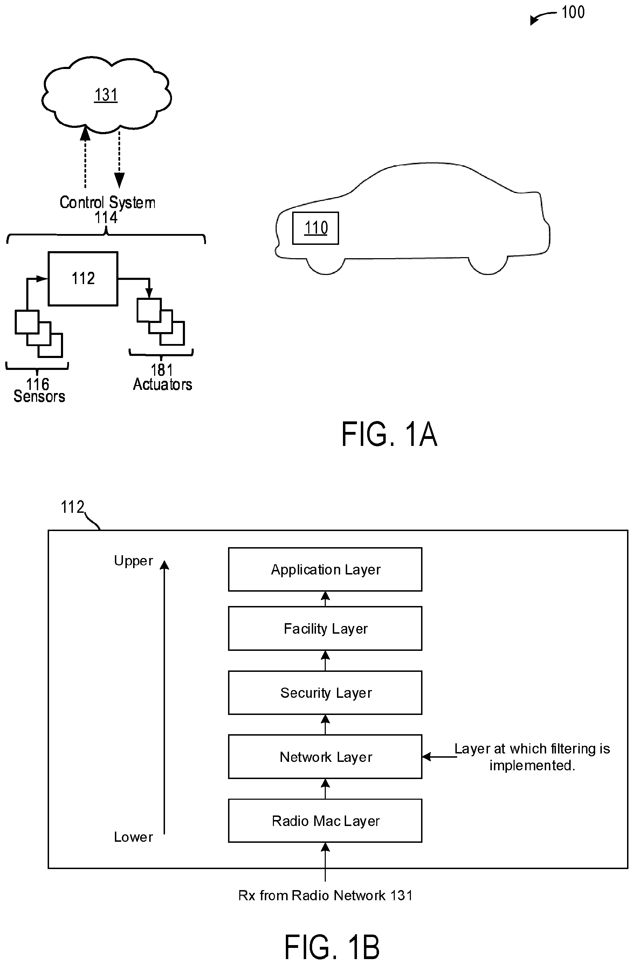

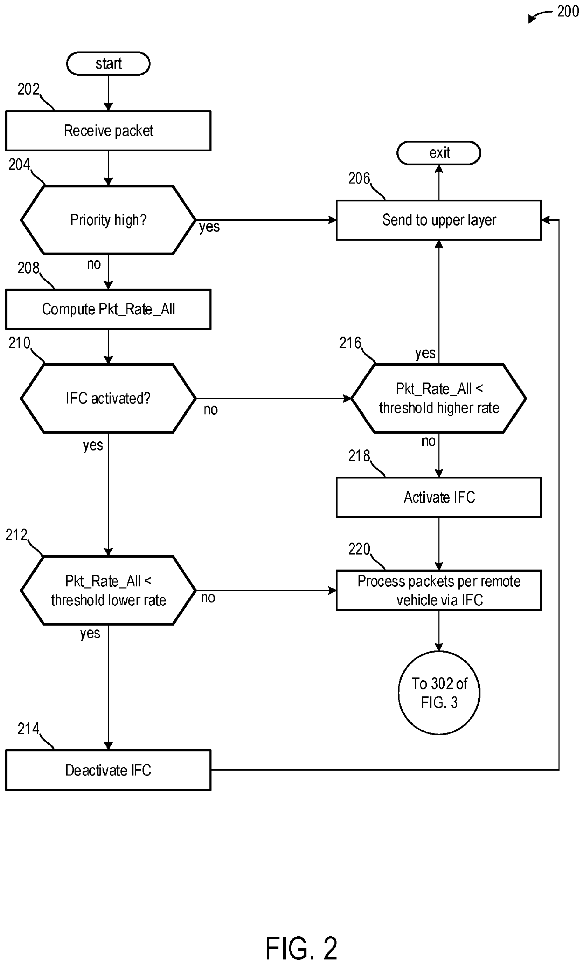

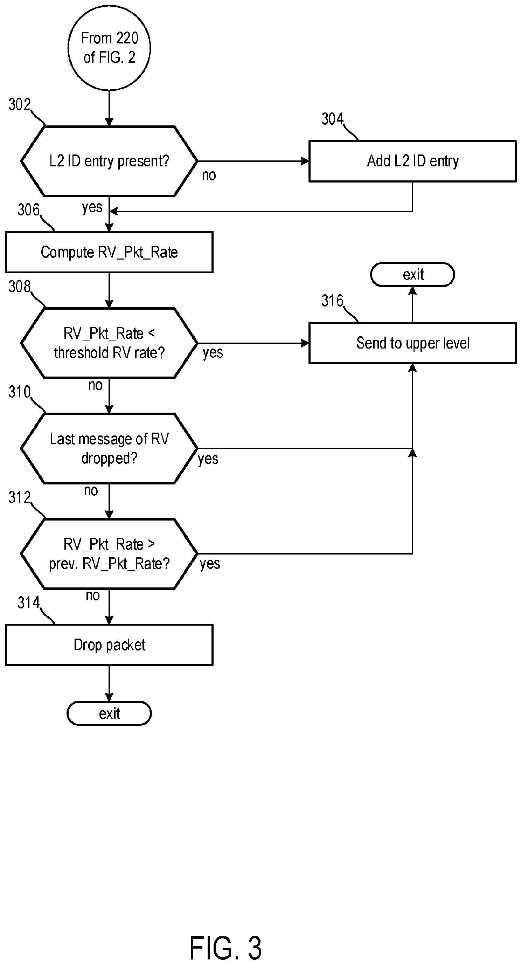

This description and embodiments of the subject matter disclosed herein relate to methods and systems for message filtering for processing. A filtering logic may be included on a software module of the on-board-unit. FIG. 1B shows layers of a processing system, for example of a vehicle, shown in FIG. 1A. Methods for filtering packets (e.g., messages) from vehicles to reduce a load on a processing unit, for example of the vehicle of FIG. 1A, are described in FIGS. 2 and 3.

FIG. 1A illustrates a vehicle 100 comprising a propulsion unit 110. The propulsion unit 110 may include one or more of an engine and a motor. The propulsion unit 110 may provide power to wheels of the vehicle 100.

The vehicle may further comprise a control system 114 is shown receiving information from a plurality of sensors 116 and sending control signals to a plurality of actuators 181. As one example, sensors 116 may sense pressure, temperature, speed, humidity, concentration, flow rates, and the like. The sensors 116 may provide sensed data to a processor 112, which may signal to the actuators 181 to adjust or maintain various operating parameters. The controller may receive input data from the various sensors, process the input data, and trigger the actuators in response to the processed input data based on instruction or code programmed therein corresponding to one or more routines. For example, control system 190 may be coupled to other vehicles or infrastructures via a wireless network 131, which may comprise Wi-Fi, Bluetooth, a type of cellular service, a wireless data transfer protocol, and so on, the internet (e.g. cloud), as is commonly known in the art.

The vehicle 100 may be a host vehicle of a plurality of vehicles, wherein each vehicle may be communicatively coupled to other vehicles or infrastructures using appropriate communications technology, via a wireless network 131, such as Wi-Fi, Bluetooth, a type of cellular service, a wireless data transfer protocol, and the internet (e.g. cloud). The vehicle messaging system may broadcast (and receive) information regarding vehicle data, vehicle diagnostics, traffic conditions, vehicle location information, vehicle operating procedures, etc., via vehicle-to-vehicle (V2V), vehicle-to-infrastructure-to-vehicle (V2I2V), vehicle-to-infrastructure (V2I), and/or vehicle-to-everything (V2X) technology. The communication and the information exchanged between vehicles can be either directly between vehicles, or can be multi-hop. In some examples, longer range communications (e.g. WiMax) may be used in place of, or in conjunction with, V2V, or V2I2V, to extend the coverage area by a few miles. In still other examples, vehicle may be communicatively coupled to other vehicles or infrastructures via the wireless network and the internet (e.g. cloud), as is commonly known in the art. One example of a V2V communication device may include dedicated-short-range-communication (DSRC) network which may allow vehicles within a threshold proximity (e.g., 5,000 feet) to communicate (e.g., transfer information) free of an internet connection

In some examples, the wireless network includes V2X functionality that may work in tandem with remote vehicles (RVs) and infrastructure components, such as road side units (RSUs). The RVs and the RSUs may exchange defined messages, creating a connected vehicle communication infrastructure to enhance road safety, efficiency etc. The wireless network may utilize radio technology, such as DSRC or cellular based V2X (e.g., CV2X). As the messages are broadcasted, vehicles in communication with the network may receive one or more of the transmitted messages.

Features of a V2X network may include where each message comprises a source Layer 2 identification (L2 ID) address to identify the source RV for a time period. The L2 ID may be adjusted periodically to enhance security and privacy of the vehicles communicating via the V2X network. Each message received within the V2X network may include a digital signature. Each message may be verified using algorithms defined by parameters to validate the message is sent from an authorized source. In one example, the authorized source is a known to the network and includes credentials authenticated by the network. By doing this, cyberattacks may be thwarted. Processors of the V2X network may become overloaded with messages during certain conditions, such as periods of high traffic congestion, which may result in a reduction in an efficiency of the network. To magnify this, RSUs and pedestrians may send messages to the network periodically, thereby increasing a load of vehicle processors and network processors.

FIGS. 2 and 3 illustrate methods for filtering messages received from the V2X network. Processing of V2X messages may be intensive, thereby increasing a load on the processing in the Host Vehicle(HV). Under high load conditions, the arrival rate of messages may surpass a processing power of the HV, which may result in the message drops due to an inability of the system to process the messages fast enough. In one example, to reduce the load, the messages are analyzed on a lower layer of the processor prior to sending the messages to an upper layer or dropping the messages. (See FIG 1B for a plurality of layers of the processor 112 for filtering and analyzing messages of a V2X receive system).

The V2X message processing can be divided into layers where the layers have a defined responsibility. The "Radio MAC layer" implements the layer 2 of the radio network. The "Network layer" implements the network layer of the V2X protocol. It implements the WSMP protocol which parses the WSM header and passes on the message to the security layer. The security layer parses the security header and verifies the received messages. The facility layer decodes the received message and performs operations like congestion control and passes the message on to the application layer.

While dropping some messages may not reduce a functionality of V2X network, it may be desired to process other high priority messages that include data relevant to current on-road behaviors. Thus, there is a demand for a method to reduce a load on the processor of the HV, while prioritizing and ensuring processing of high priority messages.

The methods of FIGS. 2 and 3 may be configured to determine a priority of messages received in response to comparing a receive rate of the messages relative to a threshold rate or periodicity in which messages are received. For example, RVs may be scheduled to receive messages at a fixed rate. However, if an event arises, such as degradation of a component, a traffic incident such as a vehicle collision, an unexpected vehicle maneuver, and so on, then a message may be sent sooner than an expected time from the vehicle. The message may be determined to be a high priority message. Another example of a high priority message may include a vehicle event where a position of the vehicle changes unexpectedly. An unexpected vehicle position change may include where the vehicle or other vehicles may not accurately extrapolate the position of the vehicle.

Other parameters of the methods may include filtering a greater number of messages from vehicles sending messages at a rate greater than other vehicles. For example, if a periodicity of a first vehicle is 100 milliseconds and a periodicity of a second vehicle is 400 milliseconds, then a greater number of messages sent by the first vehicle may be dropped. A dropped message may not be sent to an upper layer. Messages from the first vehicle may still be sent to the upper layers based on a desired Inter Transmit Time (ITT) which may be a fixed value or adjustable based on a load of the network. In one example, messages sent from the RSUs and pedestrians may not be dropped. A frequency of messages sent from the RSUs and pedestrians may be relatively low and therefore comprise high priority data.

In one example, a host vehicle may analyze congestion and receive messages regarding the congestion to the V2X. A first group of vehicles seeing the same congestion may receive at a similar rate. The Host Vehicle (HV) processor may identify the host vehicle and the other vehicles are within a relevant distance of one another such that messages from these vehicles may not be dropped or dropped at a reduced rate. If a second group of vehicles is receiving messages at a rate different than the first group of vehicles, the messages may be dropped due to the different rate implying the second group of vehicles are not within a relevant distance of the host vehicle. This may realize a further benefit in that a processing power needed for filtering the messages based on their respective rates may be reduced due to feedback from an upper layer not being needed.

Turning now to FIG. 2, it shows a method 200 for filtering packets received from RVs. Instructions for carrying out method 200 may be executed by a processor of the HV, such as processor 112 of FIGS. 1A and 1B, based on instructions stored on a memory of the processor and in conjunction with messages received from the V2X network.

At 202, the method 200 may include receiving a message. The message may include data corresponding to one or more vehicle parameters including vehicle position, speed, brake, light status etc. The packet may further include identifying information such as an MAC address, certificate, and other data used for verification. The message may be sent from a vehicle of a plurality of vehicles in communication with the V2X network.

At 204, the method 200 may include determining if a priority of a message is high. The priority may be high if the priority of the message is greater than a threshold priority. In one example, the threshold priority may correspond to a message type. For example, if the message is received from RSU or pedestrian, then its priority is relatively high. Also, if the message carries a L2 priority identified by the PPPP value in the radio header of the message, of lesser that 5, then it is treated as a high priority message. If a location of a vehicle cannot be extrapolated, then the priority of the message may be high.

If the priority of the message is high, then at 206, the method 200 includes sending the message to an upper layer. The upper layer may be configured to process the message. Processing the message may include one or more of verifying the message and sending the message to the applications for processing.

If the priority is not high, then at 208, the method 200 may include computing Pkt_Rate_All. Pkt_Rate_All may refer to an overall message rate at a radio interface, wherein the radio interface corresponds to a communication type being used. The overall message rate may be based on an average message rate at which the host vehicle's radio interface receives messages from a plurality of vehicles.

At 210, the method 200 may include determining if the intelligent flow control (IFC) is activated. The IFC may be activated in response to the Pkt_Rate_All. For example, if the Pkt_Rate_All is relatively high, then the IFC may be activated to flow control messages. The IFC may filter a greater number of messages from sources transmitting at relatively high rates. High rates may correspond to more messages being sent over a duration of time and low rates may correspond to fewer messages being sent over the duration of time.

If the IFC is already activated, then at 212, the method 200 may include determining if the Pkt_Rate_All is greater than a threshold lower rate. The threshold lower rate may correspond to a lowest rate at which the IFC may be desired. Rates below the threshold lower rate may include where a receive load at the HV radio interface is relatively low such that message processing routines, such as the IFC, may be undesired and flow control is not required as the received messages are within the processing power of the HV's upper layers.

If the Pkt_Rate_All is less than the threshold lower rate, then at 214, the method 200 may include deactivating the IFC. In one example, when the IFC is deactivated, all messages received may be verified and processed at an upper layer. The method 200 may proceed to 206 as described above.

Returning to 210, if the IFC is not activated, then at 216, the method 200 may include determining if the Pkt_Rate_All is less than the threshold higher rate. In one example, the threshold higher rate and the threshold lower rate define a band so, that the initiation and withdrawal of the IFC does not fluctuate. The threshold lower rate corresponds to a message receive rate less than the threshold higher rate. The threshold higher rate may correspond to a rate at which the IFC is demanded on to filter incoming messages to reduce the load on the central network. The threshold lower rate may be set to mitigate abrupt activations and deactivations of the IFC and is the rate at which the IFC is deactivated.

If the Pkt_Rate_All is less than the threshold higher rate, then the method 200 proceeds to 206 as described above. As such, the IFC is not used to flow control the messages and the messages may be processed at the upper layer.

If the Pkt_Rate_All is not less than the threshold higher rate (e.g., greater than or equal to the threshold higher rate), then at 218, the method 200 may include activating the IFC.

At 220, to which the method 200 may proceed following the IFC already being activated and determining the Pkt_Rate_All is not less than the threshold lower rate at 212 or following activation of the IFC at 218, the method 200 may include processing the messages per remote vehicle via the IFC. The method 200 may proceed to 302 of method 300, which describes operation of the IFC.

Turning now to FIG. 3, the method 300 may begin at 302, which includes determining if a layer 2 identification (L2 ID) entry is present in the local MAC table of the IFC at HV. This allows the IFC to determine if a message from the vehicle identified by the L2 ID has been earlier received by the HV or not.

If the L2 ID entry is not present, then at 304, the method 300 may include adding a L2 ID entry to the message. For example, if the message from a vehicle is received for the first time, then the L2 ID will not be present in the MAC table. All V2X messages will have a L2 ID.

The method 300 may proceed to 306 following identifying a L2 ID entry or adding a L2 ID entry at 302 and 304 respectively. At 306, the method 300 may include computing a RV_Pkt_Rate. The RV_Pkt_Rate may refer to an Inter Transmit Time (ITT) between two messages from a single vehicle. For example, the ITT of a first vehicle may be different than the ITT of a second vehicle, wherein the second vehicle is different than the first vehicle. The ITT may be equal to a duration of time between a first message and a second message received by a single vehicle, the second message received subsequent the first message. The duration of time may be extrapolated to determine a number of messages sent in a second or a minute, etc.

At 308, the method 300 may include determining if the RV_Pkt_Rate is less than a threshold RV rate. The threshold RV rate may be a fixed value based on an average ITT between two messages. The threshold RV rate may be dynamically adjusted in response to a resource load (e.g., a load on the upper layers of the HV). The resource load may represent an amount of processing being done by the upper layers and if it is high (e.g., higher than a threshold load), the current message filtering is not sufficient to ensure that all higher priority messages are being processed as desired. Thus, if the resource load is higher than the threshold load, then the threshold RV rate may be reduced. Alternatively, if the resource load is low, then the threshold RV rate may be increased. In some examples, the load of the central network may be continuously monitored and if the load is greater than the threshold load (e.g., equal to a high load), then messages may be dropped until only a single message from each RV is sent periodically to the upper layers, wherein the periodicity is set based on a maximum time at which an extrapolated position is assumed as correct. If the load remains above the threshold load, then messages may continue to be dropped and a flag may be set. In one example, the threshold load may be based on a processing capacity of the upper layers. The threshold load may be a fixed value.

The rate refers to the number of messages received over a given duration of time. As the rate increases, the ITT may decrease.

If the RV_Pkt_Rate is not less than the threshold RV rate (e.g., greater than or equal to the threshold RV rate), then the RV may be receiving messages at a rate greater than a desired rate and at 310, the method may include determining if a last message of the RV is dropped. In one example, if a previous message of a first RV is dropped, then it may be undesired to drop a subsequent message from the first RV.

If the last message of the RV was not dropped, then at 312, the method 300 may include determining if a current RV_Pkt_Rate is less than a previous RV_Pkt_Rate. In one example, if the current RV_Pkt_Rate is less than the previous RV_Pkt_Rate, then the RV may not be receiving the message at a scheduled time. The message preemptively received may be a high priority message, which may be undesired to drop.

If the RV_Pkt_Rate is not greater than the previous RV_Pkt_Rate, then at 314, the method 300 may include dropping the message. The IFC may filter the message (e.g., delete the message) to reduce the load on the central server. The dropped message may not include high priority. Thus, in the example of method 300, a NO at each of 308, 310, and 312 may result in the message being dropped.

Returning to 308, if the RV_Pkt_Rate is greater than the threshold RV rate, then at 316, the method 300 may include sending the message to the upper layer. The RV may receive messages at a RV_Pkt_Rate greater than the threshold RV rate, which may result in the RV not increasing the load on the central network more than an average single RV.

Returning to 310, if the last message of the RV was dropped, then a next message of the RV may be sent to the upper layer at 316.

Returning to 312, if the current RV_Pkt_Rate is greater than the previous RV Pkt Rate, then the RV may be receiving messages out of turn (e.g., sooner than expected or scheduled), and at 316, the method 300 includes sending the message to the upper layer. Thus, in the example of method 300, a YES at any of 308, 310, and 312 may result in the message being sent to the upper layer.

Thus, in one example, the methods of FIGS. 2 and 3 describe a flow control algorithm configured to analyze messages during load conditions without compromising security and functionality of the system. The flow control algorithm may not filter high priority messages, which may include messages corresponding to an abnormal vehicle event or to an unexpected change in vehicle position. Flow control of messages may continue in a stepwise fashion with respect to receive rate until the load at the upper layers of the HV falls below the threshold load. The technical effect of the flow control algorithm is to reduce a load of the upper layers while ensuring that higher priority messages are analyzed.

The disclosure further provides support for a system including a wireless network communicatively coupled to a plurality of vehicles and a processor of the vehicle comprises instructions stored on non-transitory memory thereof that when executed enable the processor to flow control messages in a lower layer of the vehicle's processing system from a first group of vehicles of the plurality of vehicles in response to a rate of messages received being greater than a threshold rate. A first example of the system further includes where the threshold rate is based on a fixed value. A second example of the system, optionally including the first example, further includes where the threshold rate is adjusted in response to a load on the vehicle's processor. A third example of the system, optionally including one or more of the previous examples, further includes where the threshold rate is decreased in response to the load on the vehicle's processor increasing. A fourth example of the system, optionally including one or more of the previous examples, further includes where flow control is activated in response to a message receive rate from the plurality of vehicles exceeding a threshold higher rate. A fifth example of the system, optionally including one or more of the previous examples, further includes where the flow control is deactivated in response to the message receive rate being less than a threshold lower rate, wherein the threshold lower rate is less than the threshold higher rate. A sixth example of the system, optionally including one or more of the previous examples, further includes where the instructions further enable the processor to send messages to an upper layer in response to a priority of a message being greater than a threshold priority. A seventh example of the system, optionally including one or more of the previous examples, further includes where the instructions further enable the processor to send messages to an upper layer in response to a message being sent prior to an expected time.

The disclosure further provides support for a method executed by a processor of a host vehicle (HV) of a plurality of vehicles, the method, comprising sending a first message received by a lower layer to an upper layer in response to the first message being a high priority message and flow controlling a second message received by the lower layer in response to a rate at which the second message is transmitted. A first example of the method further includes where the rate is compared to a threshold rate, wherein the threshold rate is adjustable based on a load at the upper layers. A second example of the method, optionally including the first example, further includes where the first message is transmitted by a first vehicle of the plurality of vehicles, and wherein the first message is transmitted prior to an expected transmission time of the first vehicle. A third example of the method, optionally including one or more of the previous examples, further includes where vehicles proximal to the first vehicle transmit messages at a similar rate to the first vehicle, and wherein messages from the vehicles proximal to the first vehicle are sent to the upper layer. A fourth example of the method, optionally including one or more of the previous examples, further includes where vehicles distal to the first vehicle transmit messages at a different rate than the first vehicle, and wherein messages from the vehicles distal to the first vehicle are flow controlled. A fifth example of the method, optionally including one or more of the previous examples, further includes where flow controlling the second message comprises dropping the message and not sending the second message to the upper layer.

The disclosure further provides support for a method for a vehicle-to-everything (V2X) communication network, the method, comprising flow controlling messages sent to the V2X communication network in response to a rate at which a sender transmits the message. A first example of the method further includes where the sender is a vehicle, and wherein the rate is based on an inter transmit time between a first message and a second message sent by the vehicle, wherein the second message is sent subsequent the first message. A second example of the method, optionally including the first example, further includes comparing the rate to a threshold rate and flow controlling messages in response to the rate being less than the threshold rate. A third example of the method, optionally including one or more of the previous examples, further includes not flow controlling messages in response to the rate being greater than the threshold rate. A fourth example of the method, optionally including one or more of the previous examples, further includes not flow controlling messages in response to the sender being a pedestrian or a road side unit.

As used herein, an element or step recited in the singular and preceded with the word "a" or "an" should be understood as not excluding plural of said elements or steps, unless such exclusion is explicitly stated. Furthermore, references to "one embodiment" of the invention do not exclude the existence of additional embodiments that also incorporate the recited features. Moreover, unless explicitly stated to the contrary, embodiments "that includes," "including," or "having" an element or a plurality of elements having a particular property may include additional such elements not having that property. The terms "including" and "in which" are used as the plain-language equivalents of the respective terms "that includes" and "wherein." Moreover, the terms "first," "second," and "third," etc. are used merely as labels, and are not intended to impose numerical requirements or a particular positional order on their objects.

This written description uses examples to disclose the invention, including the best mode, and also to enable a person of ordinary skill in the relevant art to practice the invention, including making and using any devices or systems and performing any incorporated methods. The patentable scope of the invention is defined by the claims, and may include other examples that occur to those of ordinary skill in the art. Such other examples are intended to be within the scope of the claims if they have structural elements that do not differ from the literal language of the claims, or if they include equivalent structural elements with insubstantial differences from the literal languages of the claims.

## Claims

1. A system, comprising:
a wireless network communicatively coupled to a plurality of vehicles; and
a processor of a vehicle comprises instructions stored on non-transitory memory thereof that when executed enable the processor to:
flow control messages in a lower layer of a vehicle's processing system from a first group of vehicles of the plurality of vehicles in response to a rate of messages received being greater than a threshold rate.

2. The system of claim 1, wherein the threshold rate is based on a fixed value.

3. The system of claim 1 or 2, wherein the threshold rate is adjusted in response to a load of the processor.

4. The system of claim 3, wherein the threshold rate is decreased in response to the load on the processor increasing.

5. The system of any preceding claim, wherein flow control is activated in response to a message receive rate of the plurality of vehicles exceeding a threshold higher rate.

6. The system of claim 5, wherein the flow control is deactivated in response to the message receive rate being less than a threshold lower rate, wherein the threshold lower rate is less than the threshold higher rate.

7. The system of any preceding claim, wherein the instructions further enable the processor to send messages to an upper layer in response to at least one fo the following:
- a priority of a message being greater than a threshold priority,
- a message being sent prior to an expected time.

8. The system of any preceding claim, wherein a message is transmitted by another vehicle.

9. A method executed by a processor of a host vehicle (HV) of a plurality of vehicles, the method, comprising:
sending a first message received by a lower layer to an upper layer in response to the first message being a high priority message; and
flow controlling a second message received by the lower layer in response to a rate at which the second message is received.

10. The method of claim 9, wherein the rate is compared to a threshold rate, wherein the threshold rate is adjustable based on a load at the upper layers.

11. The method of claim 9 or 10, wherein the first message is received by a first vehicle of the plurality of vehicles, and wherein the first message is received prior to an expected reception time of the first vehicle.

12. The method of claim 11, wherein vehicles proximal to the first vehicle receive messages at a similar rate to the first vehicle, and wherein messages from the vehicles proximal to the first vehicle are sent to the upper layer.

13. The method of claim 11 or 12, wherein vehicles distal to the first vehicle receive messages at a different rate than the first vehicle, and wherein messages from the vehicles distal to the first vehicle are flow controlled.

14. The method of any of claims 9 to 13, wherein flow controlling the second message comprises dropping the message and not sending the second message to the upper layer.

15. A method for a vehicle-to-everything (V2X) communication network, the method, comprising:
flow controlling messages sent to the V2X communication network in response to a rate at which a vehicle receives the message.

16. The method of claim 15, wherein the rate is based on an inter transmit time between a first message and a second message received by the vehicle, wherein the second message is received subsequent the first message.

17. The method of claim 15 or 16, further comprising at least one of the following:
- comparing the rate to a threshold rate and flow controlling messages in response to the rate being less than the threshold rate,
- not flow controlling messages in response to the rate being greater than the threshold rate,
not flow controlling messages in response to a sender of the message being a pedestrian or a road side unit.
